# EUROPÄISCHE PATENTSCHRIFT

(11) **EP 3 705 747 B1**
(45) Veröffentlichungstag und Bekanntmachung des Hinweises auf die Patenterteilung: **23.02.2022**
(21) Anmeldenummer: 19160655.7
(22) Anmeldetag: 04.03.2019
(51) Int. Cl.: F16H 1/20, F16H 1/26

(54) **STIRNRADGETRIEBE**
SPUR GEAR TRANSMISSION
ENGRENAGE CYLINDRIQUE

(43) Veröffentlichungstag der Anmeldung: 09.09.2020
(73) Patentinhaber: IMS Gear SE & Co. KGaA, 78166 Donaueschingen (DE); Continental Teves AG & Co. OHG, 60488 Frankfurt am Main (DE)
(72) Erfinder: Lauble, Michael, 78244 Gottmadingen (DE); Jungbecker, Johann, 55576 Badenheim (DE); Synovzik, Wilfried, 78183 Hüfingen (DE)
(74) Vertreter: Westphal, Mussgnug & Partner Patentanwälte mbB

(56) Entgegenhaltungen:
- CH-A- 293 225
- DE-B- 1 284 238

## Beschreibung

Die vorliegende Erfindung betrifft ein Stirnradgetriebe. Stirnradgetriebe werden aufgrund ihres vergleichsweise einfachen Aufbaus in vielen Bereichen der Antriebstechnik eingesetzt, wenn eine Über- oder Untersetzung und/oder eine Drehmomentwandlung erforderlich sind. Insbesondere im Automobilbau werden in vielen Fällen zum Verstellen von relativ zueinander bewegbaren Bauteilen Elektromotoren eingesetzt, die allerdings eine relativ hohe Nenndrehzahl und ein vergleichsweise geringes Drehmoment abgeben. Mit Stirnradgetrieben können die Drehzahl abgesenkt und das Drehmoment erhöht werden. Beispiele, bei denen Stirnradgetriebe eingesetzt werden, sind Park- und Betriebsbremsen von Fahrzeugen.

In der einfachsten Ausführungsform von Stirnradgetrieben greift ein um eine erste Drehachse drehbares Abtriebszahnrad in ein um eine zweite Drehachse drehbares Antriebszahnrad ein, wobei die erste Drehachse und die zweite Drehachse parallel zueinander verlaufen. Die in dieser Ausführungsform realisierbaren Achsabstände sind jedoch begrenzt. Um die Achsabstände für ein Baukastensystem zu vereinheitlichen, wird zumindest ein Zwischenzahnrad eingesetzt, welches sich um eine dritte Drehachse dreht und sowohl mit dem Antriebszahnrad als auch mit dem Abtriebszahnrad in Eingriff steht. Ein direkter Eingriff zwischen dem Antriebszahnrad und dem Abtriebszahnrad besteht in diesem Fall nicht.

In der CH 293 225 A ist ein Stirnradgetriebe dargestellt, bei welchem zum Ausgleich von Fluchtungsfehlern der Drehachsen das Zwischenzahnrad mit einem Pendellager gelagert ist. Zudem wird auf die DE 1 284 238 B verwiesen.

Bei derartigen Stirnradgetrieben besteht insbesondere aufgrund der Vereinheitlichung und der damit erzielbaren Kostenreduzierung die Anforderung, dass der Achsabstand zwischen der ersten Drehachse und der zweiten Drehachse fest ist, aber dennoch unterschiedliche Über- oder Untersetzungsverhältnisse realisierbar sein sollen. Die hierzu notwendigen Modifikationen am Stirnradgetriebe und insbesondere am Getriebegehäuse sollen dabei so gering wie möglich gehalten werden. Eine gängige Vorgehensweise ist, das Abtriebszahnrad unverändert zu lassen und nur die Durchmesser des Zwischenzahnrads und des Antriebszahnrads sowie die entsprechenden Verzahnungsparameter zu verändern. Je nach Anwendungsfall kann es auch gewünscht sein, das Antriebszahnrad unverändert und das Abtriebszahnrad entsprechend zu verändern, aber auch in diesem Fall den Achsabstand unverändert zu lassen. Aufgrund des fest vorgegebenen Achsabstands zwischen der ersten Drehachse und der zweiten Drehachse muss aber die Anordnung der dritten Drehachse verändert werden, um einen optimalen Eingriff zu ermöglichen. Folglich muss das Getriebegehäuse zumindest insoweit angepasst werden, dass die dritte Drehachse entsprechend angeordnet werden kann, was einen nicht unerheblichen Aufwand mit sich bringt, wodurch der Vereinheitlichung gewisse Grenzen gesetzt sind.

Aufgabe einer Ausführungsform der vorliegenden Erfindung ist es daher, ein Stirnradgetriebe der eingangs genannten Art derart weiterzuentwickeln, dass unterschiedliche Über- oder Untersetzungsverhältnisse realisierbar sind, ohne dass wesentliche Modifikationen am Getriebegehäuse notwendig sind.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft ein Stirnradgetriebe, umfassend
- ein Getriebegehäuse,
- ein im Getriebegehäuse um eine erste Drehachse drehbar gelagertes Abtriebszahnrad,
- ein im Getriebegehäuse um eine zweite Drehachse drehbar gelagertes Antriebszahnrad, wobei
   o die erste Drehachse und die zweite Drehachse parallel zueinander und um einen festen Achsabstand voneinander beabstandet verlaufen, und
- ein Zwischenzahnrad, welches mit dem Antriebszahnrad und dem Abtriebszahnrad in kämmendem Eingriff steht und um eine dritte Drehachse drehbar in einem Trägerteil gelagert ist, wobei
   o die dritte Drehachse parallel zur ersten Drehachse und zur zweiten Drehachse verläuft und
   o das Trägerteil in eine Aufnahme des Gehäuses einbringbar ist und derart ausgebildet ist, dass die dritte Drehachse zum Ausgleichen von Durchmesserunterschieden des Antriebszahnrads, des Abtriebszahnrads und/oder des Zwischenzahnrads senkrecht zur ersten Drehachse und/oder zur zweiten Drehachse bewegbar ist.

Beim vorschlagsgemäßen Stirnradgetriebe ist ein Trägerteil vorgesehen, welches so gestaltet ist, dass die dritte Drehachse, um welche sich das Zwischenzahnrad dreht, senkrecht zur ersten und zweiten Drehachse bewegbar ist. Mit anderen Worten kann die dritte Drehachse zur ersten oder zweiten Drehachse hin oder von diesen weg bewegt werden. Wird der Durchmesser beispielsweise des Zwischenzahnrads und des Antriebsrads geändert, so kann die dritte Drehachse aufgrund der Bewegbarkeit in die notwendige Position gestellt werden, die für einen optimalen Eingriff notwendig ist. Zum Bereitstellen der Bewegbarkeit senkrecht zur ersten Drehachse und senkrecht zur zweiten Drehachse kann die dritte Drehachse mit entsprechend wirkenden elastischen Elementen wie Federn oder dergleichen gelagert sein. Dabei ist es nicht notwendig, dass die Position der dritten Drehachse voreingestellt wird. Vielmehr ergibt sich die Position automatisch bei der Montage des Stirnradgetriebes aus den Durchmessern der verwendeten Zahnräder. Es genügt, nur das Antriebszahnrad und das Zwischenzahnrad entsprechend anzupassen. Weitere Modifikationen sind nur am Trägerteil selbst, vor allem aber nicht am Getriebegehäuse notwendig, so dass die Anzahl der Gleichteile des Stirnradgetriebes hoch gehalten werden kann und gleichzeitig unterschiedliche Über- oder Untersetzungsverhältnisse realisierbar sind. Je nach Anwendungsfall kann das Antriebszahnrad unverändert bleiben, so dass nur das nur das Abtriebszahnrad und das Zwischenzahnrad entsprechend angepasst werden müssen.

Erfindungsgemäß weist das Trägerteil zumindest eine Linearführung auf, mit welcher das Trägerteil in zumindest einer Richtung senkrecht zur ersten und zweiten Drehachse bewegbar im Getriebegehäuse gelagert ist. Erfindungsgemäß kann das Trägerteil nach Art eines Schlittens ausgeführt sein, welcher in einer entsprechenden Schiene zumindest entlang einer Richtung senkrecht zur ersten und zweiten Drehachse bewegbar ist. Die Linearführung bewirkt eine Lagerung, welche einer schwimmenden Lagerung ähnelt oder entspricht. Erfindungsgemäß kann die Bewegbarkeit des Trägerteils auf einfache Weise realisiert werden. Wie erwähnt, ist die dritte Drehachse auf dem Trägerteil angeordnet. Erfindungsgemäß wird nicht die dritte Drehachse selbst direkt bewegbar gelagert, sondern das Trägerteil gegenüber dem Getriebegehäuse, so dass die dritte Drehachse selbst fest mit dem Trägerteil verbunden werden kann, was technisch einfach und daher kostengünstig umsetzbar ist.

In einer weitergebildeten Ausführungsform können die erste Drehachse und die zweite Drehachse auf einer Verbindungsgeraden liegen und dritte Drehachse beabstandet zu der Verbindungsgeraden angeordnet sein. Die dritte Drehachse fluchtet daher nicht mit der ersten Drehachse und der zweiten Drehachse, sondern ist versetzt zu der Verbindungsgeraden, welche die erste Drehachse und die zweite Drehachse verbindet, angeordnet. Hierdurch lässt sich der Freiheitsgrad in der Wahl der Zahnräder erhöhen, ohne nennenswerte Änderungen am Getriebegehäuse vornehmen zu müssen.

Bei einer weitergebildeten Ausführungsform kann das Stirnradgetriebe Formschlussmittel aufweisen, mit welchen das Trägerteil im Getriebegehäuse geführt und/oder gesichert wird. Formschlussmittel können beispielsweise Anschläge oder Passfedern sein, welche einerseits eine Führung in eine erste Richtung zulassen, die Bewegbarkeit in eine senkrecht zur ersten Richtung verlaufende zweite Richtung aber begrenzen, wodurch das Trägerteil vor einem Herausfallen aus dem Getriebegehäuse gesichert werden kann. Die Formschlussmittel lassen sich auf einfache Weise bereitstellen, ohne die Montierbarkeit des Stirnradgetriebes nennenswert zu verkomplizieren.

Bei einer weiteren Ausführungsform können das Antriebszahnrad in einem ersten Getriebegehäuseteil und das Abtriebszahnrad in einem zweiten Getriebegehäuseteil gelagert sein, wobei das erste Getriebegehäuseteil und das zweite Getriebegehäuseteil lösbar miteinander verbindbar sind und das Trägerteil im verbundenen Zustand in das erste Getriebegehäuseteil und das zweite Getriebegehäuseteil hineinragt. In dieser Ausführungsform ist die Montierbarkeit des Stirnradgetriebes besonders günstig, da das Trägerteil bereits in eines der beiden Gehäuseteile eingebracht und dort vorfixiert werden kann, bevor die beiden Getriebegehäuseteile miteinander verbinden, insbesondere miteinander verschraubt werden. Auch das erste Getriebegehäuseteil und das zweite Getriebegehäuseteil können weitgehend vormontiert sein, so dass nach dem Verbinden der beiden Gehäuseteile das Stirnradgetriebe weitgehend fertiggestellt ist. Das erste Getriebegehäuseteil und das zweite Getriebegehäuseteil können dabei mit einer definierten Schnittstelle miteinander verbunden werden, so dass beispielsweise unterschiedliche zweite Getriebegehäuseteile, in denen Antriebszahnräder mit unterschiedlichen Durchmessern gelagert sind, mit demselben ersten Getriebegehäuseteil verbunden werden können. Hierdurch lässt sich die Anzahl von realisierbaren Über- oder Untersetzungsverhältnissen mit vergleichsweise geringem technischen Aufwand weiter steigern.

Eine weitergebildete Ausführungsform zeichnet sich dadurch aus, dass die Linearführung einen ersten Linearführungsabschnitt und einen zweiten Linearführungsabschnitt aufweist, wobei der erste Linearführungsabschnitt mit dem ersten Getriebegehäuseteil und der zweite Linearführungsabschnitt mit dem zweiten Getriebegehäuseteil zusammenwirken. In dieser Ausführungsform lässt sich eine Fehlmontage des Trägerteils vermeiden, da sich das Trägerteil nur in einer bestimmten Ausrichtung in das erste Getriebegehäuseteil und das zweite Getriebegehäuseteil einsetzen lassen.

Nach Maßgabe einer weiteren Ausführungsform weist das Stirnradgetriebe Stellglieder auf, mit welchen die Bewegbarkeit der dritten Drehachse einstellbar ist. Die Stellglieder können beispielsweise als Stellschrauben ausgeführt sein. Das Zwischenzahnrad kann gegenüber dem Antriebszahnrad und dem Abtriebszahnrad vorgespannt und somit das Spiel innerhalb des Stirnradgetriebes eingestellt werden. Zudem können auch Toleranzen ausgeglichen werden, so dass das Zwischenzahnrad, das Antriebszahnrad und das Abtriebszahnrad mit einer geringeren Präzision und damit kostengünstiger gefertigt werden können.

Eine weitere Ausführungsform zeichnet sich dadurch aus, dass das Abtriebszahnrad aus einem ersten Material, das Antriebszahnrad aus einem zweiten Material und das Zwischenzahnrad aus einem dritten Material gefertigt sind. Die oben genannte Möglichkeit, Toleranzen auszugleichen, kommt bei der Verwendung von unterschiedlichen Materialien besonders gut zum Tragen. Insbesondere lassen sich im Spritzguss hergestellte Kunststoffzahnräder verwenden, die nicht nachgearbeitet werden müssen, um die notwendigen Toleranzen bereitzustellen. Zudem lassen sich besonders günstige Materialpaarungen realisieren, wodurch die Geräuschentwicklung und die Lebensdauer des vorschlagsgemäßen Stirnradgetriebes erhöhen lassen.

Nach Maßgabe einer weiteren Ausführungsform sind das Antriebszahnrad und/oder das Abtriebszahnrad austauschbar im Getriebegehäuse gelagert, wobei das Zwischenzahnrad austauschbar im Trägerteil gelagert ist. Zum einen erleichtert die Austauschbarkeit die Reparatur im Schadensfall, zum anderen kann ein bestehendes Stirnradgetriebe mit vergleichsweise geringem Aufwand mit einem anderen Über- oder Untersetzungsverhältnis ausgestattet werden. Ein entsprechender Umbau lässt sich daher vergleichsweise einfach realisieren.

Beispielhafte Ausführungsformen der Erfindung werden im Folgenden unter Bezugnahme auf die beigefügten Zeichnungen näher erläutert. Es zeigen
- Figuren 1A bis 1C: ein Stirnradgetriebe nach dem Stand der Technik in unterschiedlichen Konfigurationen anhand einer prinzipiellen Draufsicht,
- Figur 2: eine perspektivische Darstellung eines Ausführungsbeispiels eines erfindungsgemäßen Stirnradgetriebes ohne ein Getriebegehäuse,
- Figur 3: eine perspektivische Explosionsdarstellung eines Getriebegehäuses eines erfindungsgemäßen Stirnradgetriebes ohne Zahnräder,
- Figur 4: eine Schnittdarstellung durch ein Ausführungsbeispiel des erfindungsgemäßen Stirnradgetriebes, und
- Figur 5: eine Draufsicht auf die Zahnräder eines zweiten Ausführungsbeispiels des erfindungsgemäßen Stirnradgetriebes.

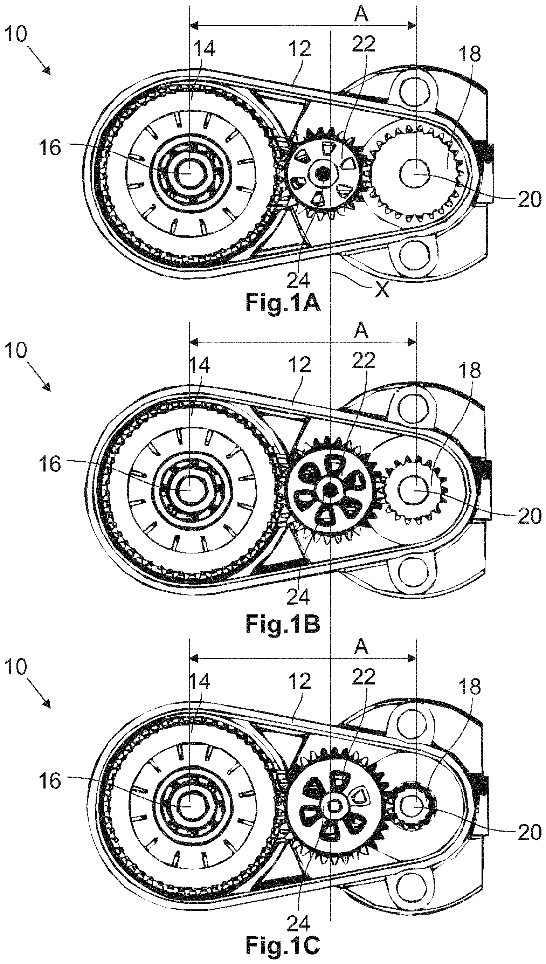

In den Figuren 1A bis 1C ist ein Stirnradgetriebe 10 nach dem Stand der Technik anhand einer prinzipiellen Draufsicht in verschiedenen Konfigurationen gezeigt. Das Stirnradgetriebe 10 weist ein Getriebegehäuse 12 auf, in welchem ein Abtriebszahnrad 14 um eine erste Drehachse 16, ein Antriebszahnrad 18 um eine zweite Drehachse 20 und ein Zwischenzahnrad 22 um eine dritte Drehachse 24 drehbar gelagert sind. Die erste Drehachse 16, die zweite Drehachse 20 und die dritte Drehachse 24 verlaufen parallel zueinander. Das Zwischenzahnrad 22 steht in kämmendem Eingriff mit dem Antriebszahnrad 18 und dem Abtriebszahnrad 14, so dass ein direkter Eingriff zwischen dem Antriebszahnrad 18 und dem Abtriebszahnrad 14 nicht vorliegt.

Das Antriebszahnrad 18 und das Abtriebszahnrad 14 sind in einem Achsabstand A zueinander angeordnet, welcher in allen drei Konfigurationen gleich ist. Die verschiedenen Konfigurationen des Stirnradgetriebes 10 unterscheiden sich wie folgt: Während das Abtriebszahnrad 14 in allen drei Konfigurationen gleich ist und insbesondere denselben Durchmesser aufweist, weisen das Antriebszahnrad 18 und das Zwischenzahnrad 22 unterschiedliche Durchmesser auf. Während der Durchmesser des Antriebszahnrads 18 von der in Figur 1A dargestellten ersten Konfiguration hin zu der in der Figur 1C dargestellten dritten Konfiguration abnimmt, nimmt der Durchmesser des Zwischenzahnrads 22 entsprechend zu. Hierdurch lassen sich unterschiedliche Über- und Untersetzungsverhältnisse bei gleichem Achsabstand A darstellen.

Da der Achsabstand A zwischen dem Antriebszahnrad 18 und dem Abtriebszahnrad 14 in allen drei Konfigurationen gleich ist, muss die Position der dritten Drehachse 24 entsprechend angepasst werden, um einen Eingriff des Zwischenzahnrads 22 in das Antriebszahnrad 18 und das Abtriebszahnrad 14 zu gewährleisten. Zur Verdeutlichung ist in den Figuren 1A bis 1C eine Bezugslinie X eingezeichnet, welche durch das Zentrum der dritten Drehachse 24 in der zweiten Konfiguration (Figur 1B) verläuft. Bezüglich der in den Figuren 1A bis 1C gewählten Darstellungen verläuft die dritte Drehachse 24 in der ersten Konfiguration (Figur 1A) nach links versetzt von der Bezugslinie X, während in der dritten Konfiguration (Figur 1C) die dritte Drehachse 24 nach rechts versetzt zu der Bezugslinie X verläuft. Dies hat zur Folge, dass das Getriebegehäuse 12 an die verschiedenen, in den Figuren 1A bis 1C dargestellten Konfigurationen angepasst werden muss, so dass es nicht möglich ist, unterschiedliche Über- und Untersetzungsverhältnisse mit baugleichen Getriebegehäusen 12 zu realisieren.

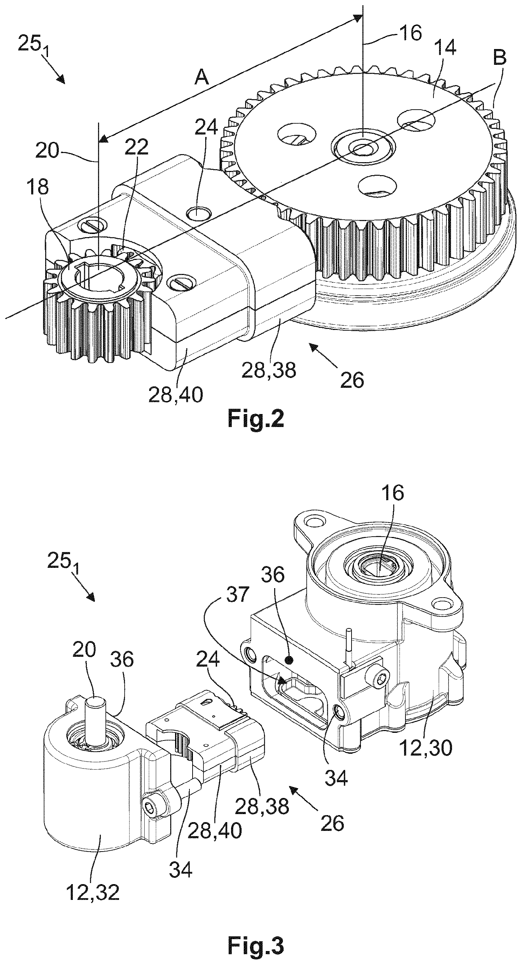

In der Figur 2 ist ein erstes Ausführungsbeispiel eines erfindungsgemäßen Stirnradgetriebes 25₁ anhand einer perspektivischen Darstellung ohne ein Getriebegehäuse 12 dargestellt, während das Getriebegehäuse 12 des ersten Ausführungsbeispiels des erfindungsgemäßen Stirnradgetriebes 25₁ in Figur 3 ebenfalls anhand einer perspektivischen Darstellung gezeigt ist. Auch das erfindungsgemäße Stirnradgetriebe 25₁ weist das Antriebszahnrad 18, das Abtriebszahnrad 14 und das Zwischenzahnrad 22 auf, wobei das Zwischenzahnrad 22 mit dem Antriebszahnrad 18 und dem Abtriebszahnrad 14 in kämmendem Eingriff steht. Wie insbesondere aus der Figur 2 ersichtlich, ist das Zwischenzahnrad 22 auf einem Trägerteil 26 angeordnet, auf dem die dritte Drehachse 24 senkrecht zur ersten Drehachse 16 und zur zweiten Drehachse 20 bewegbar angeordnet ist. Wie insbesondere aus einem Vergleich der Figuren 2 und 3 ersichtlich, wird die Bewegbarkeit der dritten Drehachse 24 in den dargestellten Ausführungsbeispielen mittels einer Linearführung 28 realisiert, mit welcher das Trägerteil 26 im Getriebegehäuse 12 gelagert ist. Die dritte Drehachse 24 als solche ist hingegen ortsfest auf dem Trägerteil 26 angeordnet. Im dargestellten Ausführungsbeispiel bewirkt die Linearführung 28 eine Bewegbarkeit der dritten Drehachse 24 zu der ersten Drehachse 16 und der zweiten Drehachse 20 hin oder von diesen weg.

Die dritte Drehachse 24 liegt auf einer Verbindungsgeraden B, welche durch die erste Drehachse 16 und die zweite Drehachse 20 verläuft, was aufgrund der perspektivischen Darstellung aus Figur 2 nicht unmittelbar ersichtlich, gleichwohl zutreffend ist. Insofern fluchtet die dritte Drehachse 24 mit der ersten Drehachse 16 und der zweiten Drehachse 20. Auch im ersten Ausführungsbeispiel des Stirnradgetriebes 25₁ sind die erste Drehachse 16 und die zweite Drehachse 20 in einem festen Achsabstand A zueinander angeordnet.

Wie aus Figur 3 hervorgeht, umfasst das Getriebegehäuse 12 ein erstes Getriebegehäuseteil 30 und ein zweites Getriebegehäuseteil 32, welche mittels einer Schraubverbindung 34 lösbar miteinander verbunden werden können. Das erste Getriebegehäuseteil 30 und das zweite Getriebegehäuseteil 32 liegen an einer Schnittstelle 36 aneinander an. Die Linearführung 28 umfasst einen ersten Linearführungsabschnitt 38 und einen zweiten Linearführungsabschnitt 40. Das Getriebegehäuse 12 weist eine Aufnahme 37 auf, in welche das Trägerteil 26 einbringbar ist. Die Aufnahme 37 erstreckt sich sowohl auf das erste Getriebegehäuseteil 30 als auch auf das zweite Getriebegehäuseteil 32. Der erste Linearführungsabschnitt 38 ist dabei so ausgebildet, dass er nur mit dem sich im ersten Getriebegehäuseteil 30 befindlichen Teil der Aufnahme 37 zusammenwirken kann, während der zweite Linearführungsabschnitt 40 nur mit dem Teil der Aufnahme 37 zusammenwirken kann, der sich im zweiten Getriebegehäuseteil 32 befindet. Folglich lässt sich das Trägerteil 26, welches nach Art einer Kassette ausgeführt ist, nur in einer bestimmten Ausrichtung in die Aufnahme 37 einsetzen.

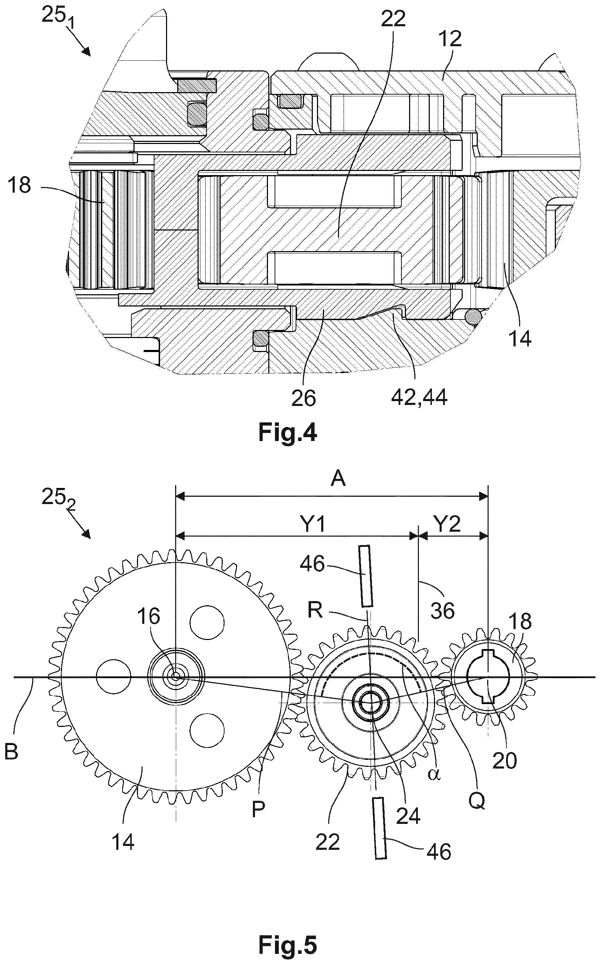

Wie aus der Figur 4 hervorgeht, umfasst das Stirnradgetriebe 25₁ Formschlussmittel 42, mit welchem das Trägerteil 26 in der Aufnahme 37 (vgl. Figur 3) gesichert wird. Im dargestellten Ausführungsbeispiel ist ein Vorsprung 44 vorgesehen, welcher vom Trägerteil 26 im eingebauten Zustand hintergriffen wird.

In Figur 5 ist ein zweites Ausführungsbeispiel des erfindungsgemäßen Stirnradgetriebes 25₂ anhand einer Draufsicht gezeigt, bei welcher nur das Antriebszahnrad 18, das Abtriebszahnrad 14 und das Zwischenzahnrad 22 gezeigt sind. Der grundsätzliche Aufbau des Stirnradgetriebes 25₂ nach dem zweiten Ausführungsbeispiel gleicht dabei im Wesentlichen dem ersten Ausführungsbeispiel des erfindungsgemäßen Stirnradgetriebes 25₁, welches in den Figuren 2 bis 4 dargestellt ist. Der wesentliche Unterschied liegt darin, dass die dritte Drehachse 24 nicht auf der Verbindungsgeraden B liegt, welche durch die erste Drehachse 16 und die zweite Drehachse 20 verläuft. Bezogen auf die Darstellung der Figur 5 ist die dritte Drehachse 24 unterhalb der Verbindungsgeraden B angeordnet. Insofern fluchtet die dritte Drehachse 24 nicht mit der ersten und der zweiten Drehachse 20. Im zweiten Ausführungsbeispiel ist das Trägerteil 26 so ausgebildet, dass die dritte Drehachse 24 auch entlang einer in Figur 5 dargestellten Winkelhalbierenden R bewegbar ist. Die Winkelhalbierende R teilt einen Winkel α in zwei gleichgroße Teile, wobei der Winkel α von einem ersten Schenkel P und einem zweiten Schenkel Q eingeschlossen wird. Der erste Schenkel P verläuft durch die erste Drehachse 16 und die dritte Drehachse 24, während der zweite Schenkel Q durch die zweite Drehachse 20 und die dritte Drehachse 24 verläuft. Um das Spiel des Eingriffs einstellen zu können, weist das Stirnradgetriebe 25₂ gemäß dem zweiten Ausführungsbeispiel Stellglieder 46 auf, die in der Figur 5 nur prinzipiell dargestellt sind und beispielsweise als Stellschrauben ausgeführt sein können, welche in der ein Gewinde des Getriebegehäuses einschraubbar sind (nicht dargestellt). Die Stellglieder 46 wirken auf die dritte Drehachse 24 und sind so ausgerichtet, dass sie die dritte Drehachse 24 entlang der Winkelhalbierenden R bewegen können.

In der Figur 5 ist ferner der Achsabstand A eingezeichnet, mit welchem die erste Drehachse 16 und die zweite Drehachse 20 beabstandet zueinander im Getriebegehäuse 12 angeordnet sind. Weiterhin ist in der Figur 5 die bereits erwähnte Schnittstelle 36 prinzipiell eingezeichnet. Die Schnittstelle 36 weist einen ersten Schnittstellenabstand Y1 zur ersten Drehachse 16 und einen zweiten Schnittstellenabstand Y2 zur zweiten Drehachse 20 auf. Die Fertigung des vorschlagsgemäßen Stirnradgetriebes 10 wird insbesondere dann vereinfacht, wenn für das Antriebszahnrad 18 ein erstes Material, für das Abtriebszahnrad 14 ein zweites Material und für das Zwischenzahnrad 22 ein drittes Material verwendet wird, die sich voneinander unterscheiden. Beispielsweise lässt sich eine Metall-Kunststoffpaarung realisieren, ohne insbesondere das Kunststoffzahnrad mit einer erhöhten Toleranz fertigen zu müssen. Folglich lässt sich das Kunststoffzahnrad im Spritzguss ohne die Notwendigkeit einer Nachbearbeitung fertigen.

### Bezugszeichenliste

- 10: Stirnradgetriebe nach dem Stand der Technik
- 12: Getriebegehäuse
- 14: Abtriebszahnrad
- 16: erste Drehachse
- 18: Antriebszahnrad
- 20: zweite Drehachse
- 22: Zwischenzahnrad
- 24: dritte Drehachse
- 25: Stirnradgetriebe
- 25₁, 25₂: Stirnradgetriebe
- 26: Trägerteil
- 28: Linearführung
- 30: erstes Getriebegehäuseteil
- 32: zweites Getriebegehäuseteil
- 34: Schraubverbindung
- 36: Schnittstelle
- 37: Aufnahme
- 38: erster Linearführungsabschnitt
- 40: zweiter Linearführungsabschnitt
- 42: Formschlussmittel
- 44: Vorsprung
- 46: Stellglied
- A: Achsabstand
- B: Verbindungsgerade
- P: erster Schenkel
- Q: zweiter Schenkel
- R: Winkelhalbierende
- X: Bezugslinie
- Y1: erster Schnittstellenabstand
- Y2: zweiter Schnittstellenabstand
- α: von P und Q eingeschlossener Winkel

## Patentansprüche

1. Stirnradgetriebe (25), umfassend
- ein Getriebegehäuse (12),
- ein im Getriebegehäuse (12) um eine erste Drehachse (16) drehbar gelagertes Abtriebsrad (14),
- ein im Getriebegehäuse (12) um eine zweite Drehachse (20) drehbar gelagertes Antriebsrad (18), wobei
o die erste Drehachse (16) und die zweite Drehachse (20) parallel zueinander und um einen festen Achsabstand (A) voneinander beabstandet verlaufen,
- ein Trägerteil (26) und
- ein Zwischenzahnrad (22), welches mit dem Antriebsrad (18) und dem Abtriebszahnrad (14) in kämmendem Eingriff steht und um eine dritte Drehachse (24) drehbar im Trägerteil (26) gelagert ist, **dadurch gekennzeichnet, dass**
o die dritte Drehachse (24) parallel zur ersten Drehachse (16) und zur zweiten Drehachse (20) verläuft,
o das Trägerteil (26) in eine Aufnahme (37) des Getriebegehäuses (12) einbringbar ist und derart ausgebildet ist, dass die dritte Drehachse (24) zum Ausgleichen von Durchmesserunterschieden des Abtriebszahnrads (14), des Antriebszahnrads (18) und/oder des Zwischenzahnrads (22) senkrecht zur ersten Drehachse (16) und/oder zur zweiten Drehachse (20) bewegbar ist und
o das Trägerteil (26) zumindest eine Linearführung (28) aufweist, mit welcher das Trägerteil (26) in zumindest einer Richtung senkrecht zur ersten Drehachse (16) und zweiten Drehachse (20) bewegbar im Getriebegehäuse (12) gelagert ist.

2. Stirnradgetriebe (25) nach Anspruch 1,
**dadurch gekennzeichnet, dass** die erste Drehachse (16) und die zweite Drehachse (20) auf einer Verbindungsgeraden (B) liegen und dritte Drehachse (24) beabstandet zu der Verbindungsgeraden angeordnet ist.

3. Stirnradgetriebe (25) nach einem der vorherigen Ansprüche, **dadurch gekennzeichnet, dass** das Stirnradgetriebe (25₁) Formschlussmittel (42) aufweist, mit welchen das Trägerteil (26) im Getriebegehäuse (12) geführt und/oder gesichert wird.

4. Stirnradgetriebe (25) nach einem der vorherigen Ansprüche, **dadurch gekennzeichnet, dass** das Abtriebszahnrad (14) in einem ersten Getriebegehäuseteil (30) und das Antriebszahnrad (18) in einem zweiten Getriebegehäuseteil (32) gelagert sind und das erste Getriebegehäuseteil (30) und das zweite Getriebegehäuseteil (32) lösbar miteinander verbindbar sind, wobei das Trägerteil (26) im verbundenen Zustand in das erste Getriebegehäuseteil (30) und das zweite Getriebegehäuseteil (32) hineinragt.

5. Stirnradgetriebe (25) nach Anspruch 4,
**dadurch gekennzeichnet, dass** die Linearführung (28) einen ersten Linearführungsabschnitt (38) und einen zweiten Linearführungsabschnitt (40) aufweist, wobei der erste Linearführungsabschnitt (38) mit dem ersten Getriebegehäuseteil (30) und der zweite Linearführungsabschnitt (40) mit dem zweiten Getriebegehäuseteil (32) zusammenwirken.

6. Stirnradgetriebe (25) nach einem der vorherigen Ansprüche, **dadurch gekennzeichnet, dass** das Stirnradgetriebe Stellglieder (46) aufweist, mit welchen die Bewegbarkeit der dritten Drehachse (24) einstellbar ist.

7. Stirnradgetriebe (25) nach einem der vorherigen Ansprüche, **dadurch gekennzeichnet, dass** das Abtriebszahnrad (14) aus einem ersten Material, das Antriebszahnrad (18) aus einem zweiten Material und das Zwischenzahnrad (22) aus einem dritten Material gefertigt sind.

8. Stirnradgetriebe (25) nach einem der vorherigen Ansprüche, **dadurch gekennzeichnet, dass**
- das Abtriebszahnrad (14) und/oder das Antriebszahnrad (18) austauschbar im Getriebegehäuse (12) gelagert sind und
- das Zwischenzahnrad (22) austauschbar im Trägerteil (26) gelagert ist.

## Claims

1. Gearwheel transmission (25), comprising
- a transmission housing (12),
- a driven gear (14), rotatably mounted around a first axis of rotation (16) in the transmission housing (12),
- a drive gear (18), rotatably mounted around a second axis of rotation (20), wherein
o the first axis of rotation (16) and the second axis of rotation (20) extend parallel to each other and at a permanent center distance (A) to each other
- a carrier part (26) and
- an intermediate gear (22) which is in combed engagement with the drive gear (18) and the driven gear (14) and which is rotatably mounted around a third axis of rotation (24) in the carrier part (26), **characterized in that**
o the third axis of rotation (24) extends parallel to the first axis of rotation (16) and to the second axis of rotation (20),
o the carrier part (26) can be inserted into a receptacle (37) of the transmission housing (12) and is configured such that the third axis of rotation (24), in order to compensate for differences in the diameter of the driven gear (14), of the drive gear (18) and/or of the intermediate gear (22), is moveable vertically with respect to the first axis of rotation (16) and/or to the second axis of rotation (20) and
o the carrier part (26) comprises at least one linear bearing (28) with which the carrier part (26) is moveably mounted in the transmission housing (12), vertically in at least one direction to the first axis of rotation (16) and the second axis of rotation (20).

2. Gearwheel transmission (25) in accordance with claim 1,
**characterized in that** the first axis of rotation (16) and the second axis of rotation ((20) lie on a straight line joining (B) and **in that** the third axis of rotation (24) is arranged at a distance to the straight line joining (B).

3. Gearwheel transmission (25) in accordance with either of the preceding claims, **characterized in that** the gearwheel transmission (25₁) comprises positive engagement means (42) with which the carrier part (26) is guided and/or secured in the transmission housing (12).

4. Gearwheel transmission (25) in accordance with any of the preceding claims, **characterized in that** the driven gear (14) is mounted in a first transmission housing part (30) and **in that** the drive gear (18) is mounted in a second transmission housing part (32) and **in that** the first transmission housing part (30) and the second transmission housing part (32) are releasably connectable to each other, wherein the carrier part (26), in the connected state, protrudes into the first transmission housing part (30) and into the second transmission housing part (32).

5. Gearwheel transmission (25) in accordance with claim 4,
**characterized in that** the linear bearing (28) comprises a first linear bearing segment (38) and a second linear bearing segment (40), wherein the first linear bearing segment (38) interacts with the first transmission housing part (30) and the second linear bearing segment (40) interacts with the second transmission housing part (32).

6. Gearwheel transmission (25) in accordance with any of the preceding claims, **characterized in that** the gearwheel transmission (25) comprises adjusting elements (46) with which the movability of the third axis of rotation (24) can be adjusted.

7. Gearwheel transmission (25) in accordance with any of the preceding claims, **characterized in that** the driven gear (14) is manufactured of a first material, **in that** the drive gear (18) is manufactured of a second material and **in that** the intermediate gear (22) is manufactured of a third material.

8. Gearwheel transmission (25) in accordance with any of the preceding claims, **characterized in that**
- the driven gear (14) and/or the drive gear (18) are interchangeably mounted in the transmission housing (12) and
- **in that** the intermediate gear (22) is interchangeably mounted in the carrier part (26).

## Revendications

1. Engrenage droit (25) comprenant :
- un carter d'engrenage (12),
- une roue entrainée (14) montée à rotation autour d'un premier axe de rotation (16) dans le carter d'engrenage (12),
- une roue motrice (18) montée à rotation autour d'un second axe de rotation (20) dans le carter d'engrenage (12),
* le premier axe de rotation (16) et le second axe de rotation (20) étant parallèles et écartés l'un de l'autre d'une distance inter axiale (A) fixe,
- une pièce de support (26), et
- une roue dentée intermédiaire (22) en prise avec la roue dentée motrice (18) et la roue dentée entrainée (14) et montée à rotation dans la pièce de support (26) autour d'un troisième axe de rotation (24),
engrenage droit caractérisé ce que
* le troisième axe de rotation (24) est parallèle au premier axe de rotation (16) et au second axe de rotation (20),
* la pièce de support (26) est mise dans un logement (37) du carter d'engrenage (12) et elle est réalisée de façon que le troisième axe de rotation (24) soit monté mobile perpendiculairement au premier axe de rotation (16) et/ou second axe de rotation (20) pour compenser les différences des diamètres de la roue dentée entrainée (14), de la roue dentée motrice (18) et/ou de la roue dentée intermédiaire (22), et
^{*} la pièce de support (26) comporte au moins un guide linéaire (28) par lequel la pièce de support (26) est montée mobile dans le carter d'engrenage (12) dans au moins une direction perpendiculaire au premier axe de rotation (16) et au second axe de rotation (20).

2. Engrenage droit (25) selon la revendication 1,
**caractérisé en ce que**
le premier axe de rotation (16) et le second axe de rotation (20) sont situés sur une droite de liaison (B) et le troisième axe de rotation (24) est écarté de la droite de liaison.

3. Engrenage droit (25) selon l'une des revendications précédentes, **caractérisé en ce que**
l'engrenage droit (25₁) comporte un moyen de liaison par la forme (42) par lequel la pièce de support (26) est guidée et/ou est fixée dans le carter d'engrenage (12).

4. Engrenage droit (25) selon l'une des revendications précédentes, **caractérisé en ce que**
la roue dentée entrainée (14) est montée dans une première partie de carter d'engrenage (30) et la roue dentée motrice (18) est montée dans une seconde partie de carter d'engrenage (32), la première partie de carter d'engrenage (30) et la seconde partie de carter d'engrenage (32) étant reliées l'une à l'autre de manière amovible, et
à l'état relié la pièce de support (26) pénétrant dans la première partie de carter d'engrenage (30) et dans la seconde partie de carter d'engrenage (32).

5. Engrenage droit (25) selon la revendication 4,
**caractérisé en ce que**
le guide linéaire (28) comprend un premier segment de guidage linéaire (38) et un second segment de guidage linéaire (40),
le premier segment de guidage linéaire (38) coopérant avec la première partie de carter d'engrenage (30) et le second segment de guidage linéaire (40) coopérant avec la seconde partie de carter d'engrenage (32).

6. Engrenage droit (25) selon l'une des revendications précédentes, **caractérisé en ce que**
l'engrenage droit comporte des organes de réglage (46) qui règlent la mobilité du troisième axe de rotation (24).

7. Engrenage droit (25) selon l'une des revendications précédentes, **caractérisé en ce que**
la roue dentée entraînée (14) est réalisée en un premier matériau, la roue dentée motrice (18) est réalisée en un second matériau et la roue dentée intermédiaire (22) est réalisée en un troisième matériau.

8. Engrenage droit (25) selon l'une des revendications précédentes, **caractérisé en ce que**
- la roue dentée entrainée (14) et/ou la roue dentée motrice (18) sont montées de manière échangeable dans le carter d'engrenage (12), et
- la roue dentée intermédiaire (22) est montée de manière échangeable dans la pièce de support (26).
